# EUROPEAN PATENT APPLICATION

(11) **EP 1 707 603 A2**
(43) Date of publication of application: **04.10.2006**
(21) Application number: 06006756.8
(22) Date of filing: 30.03.2006
(51) Int. Cl.: C09D 11/00

(54) **Ink composition for ink jet recording**

(30) Priority: 30.03.2005 JP 2005097591; 28.09.2005 JP 2005283024
(71) Applicant: SEIKO EPSON CORPORATION, Shinjuku-ku, Tokyo (JP)
(72) Inventor: Oyanagi, Takashi, Suwa-shi, Nagano-ken 392-8502 (JP); Kubota, Kazuhide, Suwa-shi, Nagano-ken 392-8502 (JP); Nakano, Keitaro, Suwa-shi, Nagano-ken 392-8502 (JP); Takemoto, Kiyohiko, Suwa-shi, Nagano-ken 392-8502 (JP)
(74) Representative: Grünecker, Kinkeldey, Stockmair & Schwanhäusser Anwaltssozietät

(57) **Abstract**

The present invention provides an ink composition comprising at least a pigment and a water-soluble solvent, wherein the composition comprises an alkyl alcohol having 4 to 6 carbon atoms in an amount of 0.05 to 0.5% by weight.

## Description

### FIELD OF THE INVENTION

The present invention relates to an ink composition. In particular, the invention relates to an ink composition suitably used in an ink jet recording method, and an ink composition in which print failures caused by the generation of fine air bubbles do not occur.

### BACKGROUND OF THE INVENTION

An ink jet recording method is a recording method of ejecting ink droplets through minute nozzles to perform printing on a recording medium such as paper. According to the ink jet recording method, recording of high image quality is obtained by using a relatively inexpensive recording device, so that this recording method has widely prevailed in an output device of a personal computer. In particular, an ink jet printer which realizes photograph image quality equal to that of a silver-halide photograph has recently been realized, and keeping properties (water resistance, light resistance and gas resistance) of printed matter have also been dramatically improved. Accordingly, the application thereof as an output device of a digital camera has also expanded as a substitute for the silver-halide photograph.

In order to realize the photograph image quality and keeping properties equal to those of the silver-halide photograph, improvement of a coloring material in an ink and an additive such as a resin added to the ink become important. In some inks employed in recent ink jet printers, a pigment excellent in weather resistance is used as the coloring material, and further, the resin or the like is added for improving wear resistance on a print medium. In general, the ink used in the ink jet printer is an aqueous ink. When the pigment is used as the coloring material, it is necessary to use a method of chemically treating a surface of the pigment, introducing a functional group thereto, and dispersing the pigment in water, or a method of dispersing the pigment together with a dispersing resin to use, because the pigment is insoluble in water.

Further, when the pigment is used as the coloring material in the aqueous ink, the ratio of the resin such as a resin emulsion added increases, and selection of a thickener, a water-soluble solvent (hereinafter also referred to as an water-soluble organic solvent) and an additive to be added to the ink also becomes particularly important

In the aqueous ink composition, it is necessary to use water, a water-soluble material and a hydrophilic material as the materials to be used. However, these materials, namely the thickener, the water-soluble solvent, the additive and the like, increase foamability and foam stability of the ink composition, and air bubbles remain without disappearing for a long time, which contributes to causing print failures. In particular, a polyether-modified silicone-based surfactant or a polyester-modified silicone-based surfactant largely increases foamability. Further, it is known that glycerol and a saccharide, each of which serves as a thickener, and the water-soluble solvent unfavorably .increases foam stability.

Furthermore, gases such as nitrogen and oxygen are more dissolved in water than in an organic solvent, so that fine air bubbles are generated by standing for a long period of time, changes in air pressure or the existence of foaming nuclei. The air bubbles generated in the ink composition flow in a recording head, which causes print failures such as ink flight deflection, scattering, nozzle clogging and nozzle thinning.

To this, it has been proposed that a silicone-based defoamer, a polyalkylene oxide-based defoamer or a polyether-based defoamer is added to reduce foamability and foam stability, as described in the following patent documents 1 to 3. However, to the polyether-based defoamer or polyester-based defoamer having very high surface activity, just this is insufficient.
Then, it is conceivable to add a material having a property of removing bubbles by breaking liquid membranes constituting the bubbles (foam breaking property), that is to say, a material slightly soluble in water.

For example, the following patent document 4 discloses an ink jet ink composition' constituted by a microemulsion comprising an aqueous pigment dispersion, at least one water-insoluble organic compound, at least one hydrotropic amphipathic material and water, and a pigment-based ink jet ink composition in which the hydrotropic amphipathic material exists in the microemulsion in an amount sufficient to solubilize one water-insoluble organic compound. Specific examples of the water-insoluble organic compounds used in this ink jet ink composition include a plurality of organic compounds, and an alkyl alcohol having 5 or more carbon atoms is mentioned as one example.

Patent Document 1: JP-A-2002-322394
Patent Document 2: JP-A-2003-105236
Patent Document 3: JP-A-2004-292707
Patent Document 4: JP-A-10-1627

However, when the water-insoluble components increase in the aqueous ink composition, the amount of the amphipathic solvent for dissolving them also increases to bring about deterioration of a state of ejection from an ink jet head by precipitation or coagulation of the insoluble components, from a reason different from that for the generation of bubbles, which contributes to causing ink flight deflection, nozzle clogging, ink scattering 'and the like in some cases.

In patent document 4, the amount of the water-insoluble contents added is 1% by weight or more, so that the ejection state of the ink deteriorates depending on the kind of solvent, resulting in easy occurrence of flight deflection, scattering, nozzle clogging, nozzle thinning and the like. In particular, when a head for ink jet recording is filled with the ink, and allowed to stand for a long period of time without performing printing at all, these phenomena become significant.

### SUMMARY OF THE INVENTION

An object of the invention is to provide an aqueous pigment ink composition for ink jet recording realizing high reliability, in which an ejection state of the ink does not deteriorate to cause no occurrence of ink flight deflection, scattering, nozzle clogging, nozzle thinning and the like, because even when fine air bubbles are generated in the ink by allowing it to stand for a long period of time in a state where no printing is performed, the bubbles rapidly disappear.
Other objects and effects of the invention will become apparent from the following description.

The present inventors have studied reliability including print quality and printing characteristics such as ejection for aqueous pigment ink compositions for ink jet recording. As a result, the inventors have discovered an ink composition in which print quality is secured and an ejection state is kept good, because even when fine air bubbles are generated in the ink particularly by filling an ink cartridge used in an ordinary ink jet printer with it and allowing it to stand for a long period of time in a state where no printing is performed, the bubbles rapidly disappear. The invention is based on such a finding.

According to the invention, the above-mentioned object can be attained by employing the following constitutions.

That is to say, the invention is as follows:
(1) An ink composition comprising at least a pigment and a water-soluble solvent, wherein the composition comprises an alkyl alcohol having 4 to 6 carbon atoms in an amount of 0.05 to 0.5% by weight;
(2) The ink composition described in (1), wherein the water-soluble solvent is a 1,2-alkanediol or glycerol;
(3) The ink composition described in (2), wherein the 1,2-alkanediol is 1,2-hexanediol;
(4) The ink composition described in any one of (1) to (3), wherein the alkyl alcohol having 4 to 6 carbon atoms is an n-alkyl alcohol;
(5) The ink composition described in (4), wherein the n-alkyl alcohol is 1-hexanol;
(6) The ink composition described in any one of (1) to (5), wherein the composition further comprises a surfactant;
(7) The ink composition described in (6), wherein the surfactant is a silicone-based surfactant;
(8) The ink composition described in (7), wherein the silicone-based surfactant is a polyether-modified silicone-based surfactant;
(9) The ink composition described in (8), wherein the polyether-modified silicone-based surfactant has the following structure:

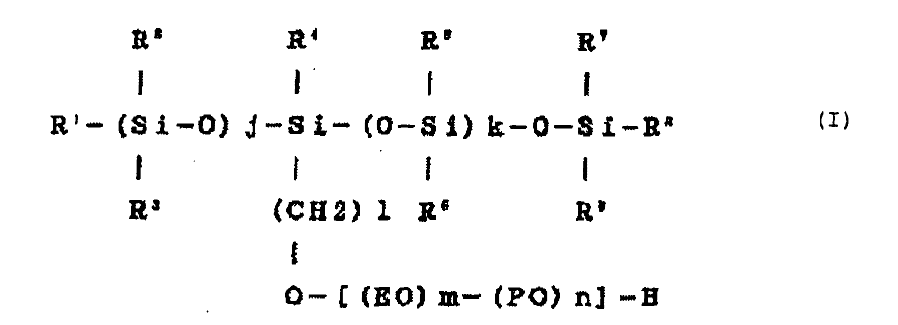

wherein R¹ to R⁹ each independently represents a C₁₋₆ alkyl group, j and k each independently represents an integer of 1 or more, EO represents an ethyleneoxy group, PO represents a propyleneoxy group, and m and n each represents an integer of 0 or more, provided that m+n is an integer of 1 or more, and that the order of EO and PO in the brackets is not limited and EO and PO may be arranged randomly or may form a block.; (10) The ink composition described in any one of (1) to (9), wherein the pigment is a pigment dispersed with a resin; and (11) The ink composition described in any one of (1) to (10), wherein the composition further comprises a sugar alcohol.

By constituting the ink composition as described above, the print quality is secured and the ejection state is kept good, because even when fine air bubbles are generated in the ink by filling an ink cartridge used in an ordinary ink jet printer with it and allowing it to stand for a long period of time in a state where no printing is performed, the bubbles rapidly disappear.

### DETAILED DESCRIPTION OF THE INVENTION

The ink composition for ink jet recording of the invention will be described in detail below.

The ink composition according to the invention comprises a pigment as a colorant. Any of inorganic and organic pigments may be used. The inorganic pigments include carbon blacks produced by known processes such as a contact process, a furnace process and a thermal process, in addition to titanium oxide and iron oxide. Further, as the organic pigments, there can be used azo pigments (including azo lake, an insoluble azo pigment, a condensed azo pigment, a chelate azo pigment and the like), polycyclic pigments (for example, a phthalocyanine pigment, a perylene pigment, a perinone pigment, an anthraquinone pigment, a quinacridone pigment, a dioxazine pigment, a thioindigo pigment, an isoindolinone pigment, a quinophthalone pigment and the like), dye-type chelate pigments (for example, a basic dye-type chelate pigment, an acid dye-type chelate pigment and the like), nitro pigments, nitroso pigments, aniline black and the like.

Specific examples of the pigments include, as carbon blacks, No. 2300, No. 900, MCF 88, No. 33, No. 40, No. 45, No. 52, MA7, MA8, MA100, No. 2200B and the like manufactured by Mitsubishi Chemical Corporation; Raven 5750, Raven 5250, Raven 5000, Raven 3500, Raven 1255, Raven 700 and the like manufactured by Columbian Carbon Co., Ltd.; Regal 400R, Regal 330R, Regal 660R, Mogul L, Mogul 700, Monarch 800, Monarch 880, Monarch 900, Monarch 1000, Monarch 1100, Monarch 1300, Monarch 1400 and the like manufactured by Cabot Corporation; and Color Black FW1, Color Black FW2, Color Black FW2V, Color Black FW18, Color Black FW200, Color Black S150, Color Black S160, Color Black S 170, Printex 35, Printex U, Printex V, Printex 140 U, Special Black 6, Special Black 5, Special Black 4A, Special Black 4 and the like manufactured by Degussa AG.

Examples of the pigments used in yellow inks include C.I. Pigment Yellow 1, 2, 3, 12, 13, 14, 16, 17, 73, 74, 75, 83, 93, 95, 97, 98, 109, 110, 114, 128, 129, 138, 150, 151, 154, 155, 180, 185 and the like.

Examples of the pigments used in magenta inks include C.I. Pigment Red 5, 7, 12, 48 (Ca), 48 (Mn), 57 (Ca), 57:1, 112, 122, 123, 168, 184, 202, 209 and the like.

Examples of the pigments used in cyan inks include C.I. Pigment Blue 1, 2, 3, 15:3, 15:4, 16, 22. and 60.

According to a preferred embodiment of the invention, the average particle size of the pigment is preferably within the range of 10 to 200 nm, and more preferably from about 50 to about 150 nm.

Although the amount of the pigment added may be appropriately determined, it is preferably within the range of 0.1 to 20% by weight, and more preferably within the range of 1 to 10% by weight, based on the ink composition.

In the invention, it is preferred that the pigment is added to the ink composition as a pigment dispersion in which the pigment is dispersed with a dispersant. The dispersants include a polymeric dispersant and a surfactant.

Preferred examples of the polymeric dispersants include natural polymers, and specific examples thereof include proteins such as glue, gelatin, casein and albumin; natural rubbers such as gum arabic and tragacanth gum; glucosides such as saponin; alginic acid and alginic acid derivatives such as propylene glycol alginate, triethanolamine alginate and ammonium alginate; cellulose derivatives such as methylcellulose, carboxymethylcellulose, hydroxyethylcellulose and ethylhydroxyethylcellulose; and the like.

Preferred examples of the polymeric dispersants include synthetic polymers, and examples thereof include polyvinyl alcohols; polyvinyl pyrrolidones; acrylic resins such as polyacrylic acid, an acrylic acid-acrylonitrile copolymer, a potassium acrylate-acrylonitrile copolymer, a vinyl acetate-acrylic ester copolymer and an acrylic acid-alkyl acrylate copolymer; styrene-acrylic acid resins such as a styrene-acrylic acid copolymer, a styrene-methacrylic acid copolymer, a styrene-methacrylic acid-alkyl acrylate copolymer, a styrene-α-methylstyrene-acrylic acid copolymer and a styrene-α-methylstyrene-acrylic acid-alkyl acrylate copolymer; a styrene-maleic acid copolymer; a styrene-maleic anhydride copolymer; a vinylnaphthalene-acrylic acid copolymer; a vinylnaphthalene-maleic acid copolymer; vinyl acetate-based copolymers such as a vinyl acetate-ethylene copolymer, a vinyl acetate-fatty acid vinylethylene copolymer, a vinyl acetate-maleic ester copolymer, a vinyl acetate-crotonic acid copolymer and a vinyl acetate-acrylic acid copolymer; and salts thereof. Of these, particularly preferred are carboxyl group (preferably in a salt form) -containing polymers (for example, the above-mentioned styrene-acrylic acid resin, styrene-maleic acid, styrene-maleic anhydride, vinylnaphthalene-acrylic acid copolymer, vinylnaphthalene-maleic acid copolymer and vinyl acetate-acrylic acid copolymer), copolymers of hydrophobic group-containing monomers and hydrophilic group-containing monomers and polymers comprising monomers having both hydrophobic and hydrophilic groups. Examples of the above-mentioned salts include salts with diethylamine, ammonia, ethylamine, triethylamine, propylamine, isopropylamine, dipropylamine, butylamine, isobutylamine, triethanolamine, diethanolamine, aminomethylpropanol, morpholine and the like. The weight average molecular weight of these copolymers is preferably from 3,000 to 30,000, and more preferably from 5,000 to 15,000.

Further, examples of the surfactants which are preferred as the dispersants include anionic surfactants such as a fatty acid salt, a higher alkyldicarboxylic acid salt, a higher alcohol sulfuric ester salt, a higher alkylsulfonic acid salt, a condensate of a higher fatty acid and an amino acid, a sulfosuccinic ester salt, a naphthenic acid salt, a liquid fatty oil sulfuric ester salt and an alkylallylsulfonic acid salt; cationic surfactants such as a fatty acid amine salt, a quaternary ammonium salt, a sulfonium salt and a phosphonium; nonionic surfactants such as a polyoxyethylene alkyl ether, a polyoxyethylene alkyl ester, a sorbitan alkyl ester and a polyoxyethylene sorbitan alkyl ester; and the like. Those skilled in the art will understand that the above-mentioned surfactants also act as a surfactant, when added to the ink composition.

Furthermore, the ink composition of the invention contains a water-soluble solvent. Although not particularly limited, the water-soluble solvent is preferably a 1,2-alkanediol and/or glycerol. Specific examples of the 1,2-alkanediols include 1,2-ethanediol, 1,2-propanediol, 1,2-butanediol, 1,2-pentanediol, 1,2-hexanediol, 1,2-heptanediol, 1,2-octanediol and the like. More preferred are 1,2-propanediol, 1,2-butanediol, 1,2-pentanediol and 1,2-hexanediol, and most preferably is 1,2-hexanediol. Although the amount of the 1,2-alkanediol added may be appropriately determined, it is preferably from about 1 to about 15% by weight, and more preferably from about 2 to about 10% by weight.

In addition, it is preferred that a low boiling point organic solvent is used as the water-soluble solvent. Examples of the low boiling point organic solvents include methanol, ethanol, n-propyl alcohol, iso-propyl alcohol, n-butanol, sec-butanol, tert-butanol, iso-butanol, n-pentanol and the like. In particular, a monohydric alcohol is preferred. The low boiling point organic solvent has the effect of shortening the time required for drying the ink. The amount of the low boiling point organic solvent added is preferably about 5% by weight or less, and more preferably about 2% by weight or less, based on the ink composition.

The ink composition according to the invention can also further contain a wetting agent comprising a high boiling point organic solvent. Preferred examples of the high boiling point organic solvents include polyhydric alcohols such as ethylene glycol, diethylene glycol, triethylene glycol, polyethylene glycol, polypropylene glycol, propylene glycol, butylene glycol, 1,2,6-hexanetriol, thioglycol, hexylene glycol, glycerin, trimethylolethane and trimethylolpropane; urea; 2-pyrrolidone; N-methyl-2-pyrrolidone, 1,3-dimethyl-2-imidazolidinone and the like. These may be used either alone or as a mixture of two or more thereof. Of these, preferred are glycerin, triethylene glycol monobutyl ether, 2-pyrrolidone, ethylene glycol, diethylene glycol, triethylene glycol, polyethylene glycol, diethylene glycol monobutyl ether, and urea. The amount thereof added is preferably within the range of about 1 to about 20% by weight, and more preferably within the range of about 5 to about 10% by weight, based on the ink composition.

Further, the ink composition of the invention contains an alkyl alcohol having 4 to 6 carbon atoms in an amount ranging from 0.05 to 0.5% by weight. According to a preferred embodiment of the invention, the alkyl alcohol having 4 to 6 carbon atoms is preferably an n-alkyl alcohol (primary alcohol), and more preferably 1-butanol, 1-pentanol or 1-hexanol. According to a result of studies by the present inventors, it has become clear that the fine air bubbles generated in the ink at the time when allowed to stand for a long period of time are effectively defoamed by adding the alkyl alcohol to the ink composition within the above-mentioned range, whereby print stability is further improved.

Furthermore, although the reason for this is not know exactly, the combined use of 1,2-hexanediol and n-hexanediol gives the best results for the above-mentioned effect.

In the ink composition of the invention, the amount of the alkyl alcohol having 4 to 6 carbon atoms added is within the range of 0.05 to 0.5% by weight. When the amount of the alkyl alcohol having 4 to 6 carbon atoms added is less than 0.05% by weight, the defoaming effect at the time when the above-mentioned ink is allowed to stand for a long period of time decreases. When the alkyl alcohol is added in an amount exceeding 0.5% by weight, dispersion is destabilized ,and pigment particles aggregate, whereby the hue of the pigment ink changes in some cases to cause the defect that the hue of printed matter changes.

According to a preferred embodiment of the invention, it is preferred that the ink composition of the invention contains as the surfactant a compound represented by the following formula (I):

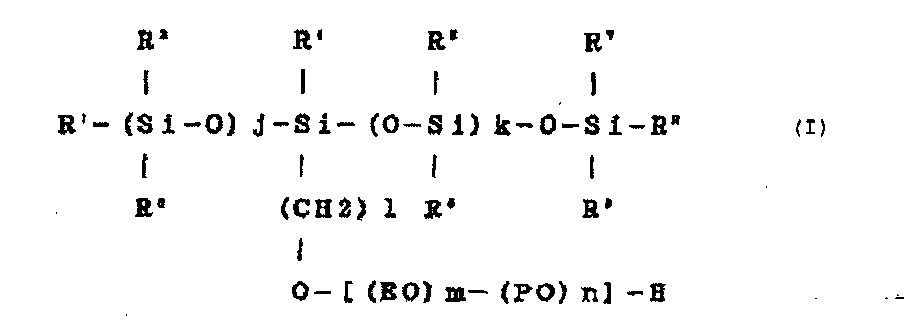

In formula (I) R1 to R9 each independently represents a C1-6 alkyl group, preferably a methyl group. j and k each independently represents an integer of 1 or more, preferably 1 or 2. m and n each represents an integer of 0 or more, provided that m+n is an integer of 1 or more, preferably 2 to 4.

According to a preferred embodiment of the invention, a compound satisfying j=k+1 is preferred as the compound of formula (I). Further, according to another preferred embodiment of the invention, a compound in which all of R1 to R9 each represents a methyl group, j represents 2, k represents 1, 1 represents 1, m represents an integer of 1 or more and n represents 0 is preferred as the compound of formula (I).

Although the amount of the compound of formula (I) added may be appropriately determined, it is preferably from 0.03 to 3% by weight, more preferably about 0.1 to about 2% by weight, and still more preferably about 0.3 to about 1% by weight.

The compounds of formula (I) are commercially available, and it is possible to utilize them. For example, silicone-based surfactants BYK-345 BYK-346 and BYK-348 are available from Byk-Chemie Japan K.K.

The ink composition in the invention further comprises water. As the water, there can be used pure water such as ion exchanged water, ultrafiltrated water, reverse osmosed water or distilled water, or ultrapure water. Further, the use of water which has been sterilized by ultraviolet irradiation, the addition of hydrogen peroxide or the like is suitable, because the generation of mold or bacteria can be prevented when the ink composition is stored for a long period of time.

Further, the ink composition according to the invention can also contain a penetrating agent. Specific examples of the penetrating agents include glycol ethers and/or acetylene glycol surfactants.

Specific examples of the glycol ethers used in the invention include ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol-mono-iso-propyl ether, diethylene glycol mono-iso-propyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, propylene glycol mono-n-butyl ether, dipropylene glycol mono-n-butyl ether, dipropylene glycol monoethyl ether, dipropylene glycol mono-n-propyl ether, dipropylene glycol mono-iso-propyl ether and the like. These may be used either alone or as a mixture of two or more thereof. The amount of the glycol ether added is preferably within the range of 1 to 20% by weight, and more preferably within the range of 2 to 15% by weight, based on the ink composition.

According to a preferred embodiment of the invention, the use of the alkyl ether of a polyhydric alcohol is preferred. In particular, the use of ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether or triethylene glycol monobutyl ether is preferred. Most preferred is triethylene glycol monobutyl ether. Although the amount of the alkyl ether of the polyhydric alcohol added may be appropriately determined, it is preferably from about 1 to about 10% by weight, and more preferably from about 3 to about 5% by weight.

To the ink composition according to the invention, it is also possible to add a saccharide. Preferred specific examples of the saccharides include monosaccharides disaccharides, oligosaccharides (including trisaccharides and tetrasaccharides) and other polysaccharides, preferably glucose, mannose, fructose, ribose, xylose, arabinose, galactose, aldonic acid, glucitol (sorbitol), maltose, cellobiose, lactose, sucrose, trehalose, maltotriose, xylitol and the like. The term "polysaccharides" as used herein means saccharides in the broad sense, and shall be considered to include substances which widely exist in nature, such as alginic acid, α-cyclodextrin and cellulose. Derivatives of these saccharides include reducing sugars of the above-mentioned saccharides (for example, sugar alcohols represented by the general formula HOCH2(CHOH)nCH2OH, wherein n represents an integer of 2 to 5), oxidizing sugars (for example, aldonic acid and uronic acid), amino acids, thiosugars and the like. In particular; sugar alcohols are preferred, and specific examples thereof include maltitol, sorbitol and the like.

The content of these saccharides is preferably from about 1 to about 20% by weight, and more preferably from about 3 to about 10% by weight, based on the ink composition.

A nozzle anticlogging agent, a preservative, an antioxidant, an electric conductivity adjustor, a pH modifier, a viscosity modifier, a surface tension adjustor, an oxygen absorber or the like can be further added to the ink composition according to the invention.

Examples of the preservatives and biocides include sodium benzoate, pentachlorophenol sodium, sodium 2-pyridinethiol-1-oxide, sodium sorbate, sodium dehydroacetate, 1,2-dibenzothiazolin-3-one (Proxel CRL, Proxel BDN, Proxel GXL, Proxel XL-2 and Proxel TN manufactured by Avecia) and the like.

Further, examples of the pH modifiers, solubilizers or antioxidants include amines such as diethanolamine, triethanolamine, propanolamine and morpholine, and modified products thereof; inorganic salts such as potassium hydroxide, sodium hydroxide and lithium hydroxide; ammonium hydroxide; quaternary ammonium hydroxides such as tetramethylammonium; carbonates such as potassium carbonate, sodium carbonate and lithium carbonate; phosphates; N-methyl-2--pyrrolidone; urea compounds such as urea, thiourea and tetramethylurea; allophanates such as allophanate and methyl allophanate; biurets such as biuret, dimethylbiuret and tetramethylbiuret; and L-ascorbic acid and salts thereof.

### EXAMPLES

The invention will be illustrated in greater detail with reference to the following examples, but the invention should not be construed as being limited thereto.

### Preparation 1 of Ink Composition

A pigment, a dispersant and ion exchanged water were mixed and stirred to form a mixture, which was dispersed in a sand mill (manufactured by Yasukawa Seisakusho) with glass beads (1.7 mm in size, 1.5 times the weight of the mixture) for 2 hours. Thereafter, the beads were removed by using a separator to obtain a pigment dispersion.

Then, various additives other than the pigment and the dispersant in the following compounding ingredients were mixed to prepare a completely dissolved ink solvent.
The above-mentioned pigment dispersion was gradually added dropwise to this ink solvent with stirring, and after the termination of dropping, mixing and stirring were performed at ordinary temperature for 30 minutes. The mixed solution was filtered through a 5-µm membrane filter to obtain an ink composition. The ink compositions are shown below.

Example 1

| | |
|---|---|
| C.I. Pigment Red 122 (pigment) | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc., sugar alcohol) | 8.0% by weight |
| BYK-348 (Byk-Chemie Japan K.K., polyether-modified silicone-based surfactant) | 0.5% by weight |
| 1,2-Hexanediol | 5.0% by weight |
| Triethanolamine | 1.0% by weight |
| 1-Butyl Alcohol | 0.2% by weight |
| Ion Exchanged Water | balance |

Example 2

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight |
| 2-Butyl Alcohol | 0.2% by weight |
| Ion Exchanged Water | balance |

Example 3

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight. |
| 1-Pentyl Alcohol | 0.2% by weight |
| Ion Exchanged Water | balance |

Example 4

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight |
| 2-Pentyl Alcohol | 0.2% by weight |
| Ion Exchanged Water | balance |

Example 5

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| MS-500 (Hayashibara Shoji Inc.) | 8.0% by weight |
| BYK-348 (Byk-Chemie Japan K.K.) | 0.5% by weight |
| 1,2-Hexanediol . | 5.0% by weight |
| Triethanolamine | 1.0% by weight |
| 3-Pentyl Alcohol | 0.2% by weight |
| Ion Exchanged Water | balance |

Example 6

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight |
| 1-Hexyl Alcohol | 0.2% by weight |
| Ion Exchanged Water | balance |

Example 7

| | |
|---|---|
| C.I. Pigment Red 122 | 1.0% by weight |
| Styrene-Acrylic Acid Copolymer·Amonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan K.K.) | 0.5% by weight |
| 1, 2-Hexanediol | 5.0 % by weight |
| Triethanolamine | 1.0% by weight |
| 1-Hexyl Alcohol | 0.05% by weight |
| Ion Exchanged Water | balance |

Example 8

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight |
| 1-Hexyl Alcohol | 0.10% by weight |
| Ion Exchanged Water | balance |

Example 9

| | |
|---|---|
| c.r. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight |
| 1-Hexyl Alcohol | 0.20% by weight |
| Ion Exchanged Water | balance |

Example 10

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight |
| 1-Hexyl Alcohol | 0.50% by weight |
| Ion Exchanged Water | balance |

Comparative Example 1

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight |
| Ethyl Alcohol | 0.2% by weight |
| Ion Exchanged Water | balance |

Comparative Example 2

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight |
| 1-Propyl Alcohol | 0.2% by weight |
| Ion Exchanged Water | balance |

Comparative Example 3

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-chemie Japan K.K.) | 0.5% by weight |
| 1,2-Hexanediol | 5.0% by weight |
| Triethanolamine | 1.0% by weight |
| 2-Propyl Alcohol | 0.2% by weight |
| Ion Exchanged Water | balance |

Comparative Example 4

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight |
| CH-200 (Dow Corning Toray, Co., Ltd., silicone-based deforamer) | 0.05% by weight |
| Ion Exchanged Water | balance |

Comparative Example 5

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight |
| TSA 730 (GE Toshiba Silicones Co., Ltd., silicone-based defoamer) | 0.05% by weight |
| Ion Exchanged Water | balance |

Comparative Example 6

| | |
|---|---|
| C.I. Pigment Red 122 | 1.0% by weight |
| Styrene-Acrylic Acid Copolymer·Ammonium Salt (dispersant average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight |
| PF 751 (Asahi Glass Co., Ltd., polyether polyol-based defoamer) | 0.05% by weight |
| Ion Exblianged Water | balance |

Comparative Example 7

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan X.K.) | 0.5% by weight |
| 1,2-Hexanediol | 5.0% by weight |
| Triethanolamine | 1.0% by weight |
| PF 752 (Asahi Glass Co., Ltd., polyether polyol-based defoamer) | 0.05% by weight |
| Ion Exchanged Water | balance |

Comparative Example 8

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight |
| PF 753 (Asahi Glass Co., Ltd., polyether polyol-based defoamer) | 0.05% by weight |
| Ion Exchanged Water | balance |

Comparative Example 9

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight |
| BYK-348 (Byk-Chemie Japan K.K.) | 0.5% by weight |
| 1,2-Hexanediol | 5.0% by weight |
| Triethanolamine | 1.0% by weight |
| Ion Exchanged Water | balance |

Comparative Example 10

| | |
|---|---|
| C.I. Pigment Red 122 | 1.0% by weight |
| Styrene-Acrylic Acid Copolymer·Ammonium Salt (dispersant, average molecular weight: 10,000) | 1.0% by weight |
| Glycerol | 20.0% by weight |
| HS-500 (Hayashibara Shoji Inc.) | 8.0% by weight. |
| BYK-348 (Byk-Chemie Japan K.K.) | 0.5% by weight |
| 1,2-Hexanediol | 5.0% by weight |
| Triethanolamine | 1.0% by weight |
| 1-Hexyl Alcohol | 0.01% by weight |
| Ion Exchanged Water | balance |

Preparation 2 of Ink Composition
A pigment, a styrene-acrylic acid copolymer resin (acid value: 100, average molecular weight: 10,000), potassium hydroxide and water were mixed, and dispersed in a sand mill (manufactured by Yasukawa Seisakusho) with zirconia beads. Thereafter, the beads were removed, followed by centrifugation and filtration through a filter to remove coarse particles. Thus, a pigment dispersion was prepared.

An aqueous organic solvent, a surfactant, water and the like were added to the above-mentioned pigment dispersion, followed by stirring at 25°C for 60 minutes. The mixed solution was filtered through a 5-µm membrane filter to obtain an ink composition. The ink compositions are shown below.

Example 11

| | |
|---|---|
| C.I. Pigment Blue 15:3 | 5.0% by weight |
| Styrene-Acrylic Acid Copolymer (acid value: 100, average molecular weight: 10,000) | 2.0% by weight |
| 1,2-Hexanediol | 5.0% by weight |
| Glycerol | 10% by weight |
| HS-500 (Hayashibara Shoji Inc., reduced maltose) | 10% by weight |
| BYK-348 (Byk-Chemie Japan K.K.) | 0.5% by weight |
| Triethanolamine | 1.0% by weight |
| n-Butanol | 0.05% by weight |
| Ultrapure Water | balance |

Example 12

| | |
|---|---|
| C.I. Pigment Red 122 | 4.0% by weight |
| Styrene-Acrylic Acid Copolymer (acid value: 100, average molecular weight: 10,000) | 1.5% by weight |
| 1,2-Hexanediol | 5.0% by weight |
| Glycerol | 10% by weight |
| HS-500 (Hayashibara Shoji Inc., reduced maltose) | 10% by weight |
| BYK-348 (Byk-Chemie Japan K.K.) | 0.5% by weight |
| Triethanolamine | 1.0% by weight |
| n-Hexane | 0.5% by weight |
| Ultrapure Water | balance |

Example 13

| | |
|---|---|
| C.I. Pigment Blue 15:3 | 5.0% by weight |
| Styrene-Acrylic Acid Copolymer (acid value: 100, average molecular weight: 10,000) | 2.0% by weight |
| 1,2-Hexanediol | 5.0% by weight |
| Glycerol | 10% by weight |
| HS-500 (Hayashibara Shoji Inc., reduced maltose) | 10% by weight |
| BYK-348 (Byk-Chemie Japan K.K.) . | 0.5% by weight |
| Triethanolamine | 1.0% by weight |
| 2-Pentyl Alcohol | 0.05% by weight |
| Ultrapure Water | balance |

Comparative Example 11

| | |
|---|---|
| C.I. Pigment Blue 15:3 | 5.0% by weight |
| Styrene-Acrylic Acid Copolymer (acid value: 100, average molecular weight: 10,000) | 2.0% by weight |
| Glycerol | 10% by weight |
| Olfin E1010 (Shin-Etsu Chemical Co., Ltd.) | 1.0% by weight |
| Triethanolamine | 1.0% by weight |
| Ethanol | 1.0% by weight |
| Ultrapure Water | balance |

Comparative Example 12

| | |
|---|---|
| C.I. Pigment Red 122 | 4.0% by weight |
| Styrene-Acrylic Acid Copolymer (acid value: 100, average molecular weight: 10,000) | 1.5% by weight |
| Diethylene Glycol Monobutyl Ether | 5.0% by weight |
| Glycerol | 10% by weight |
| HS-300 (Hayashibara Shoji Inc., reduced maltose) | 10% by weight |
| Olfin E1010 (Shin-Etsu Chemical Co., Ltd.) | 1.0% by weight |
| Triethanolamine | 1.0% by weight |
| n-Hexanol | 0.04% by weight |
| Ultrapure Water | balance |

Comparative Example 13

| | |
|---|---|
| C.I. Pigment Red 122 | 4.0% by weight |
| Styrene-Acrylic Acid copolymer (acid value: 100, average molecular weight: 10, 000) | 1.5% by weight |
| 1,2-Hexanediol | 5.0.% by weight |
| Glycerol | 10% by weight |
| Olfin E1010 (Shin-Etsu Chemical Co., Ltd.) | 1.0% by weight |
| Triethanolamine | 1.0% by weight |
| n-Hexanol | 1.0% by weight |
| Ultrapure Water | balance |

Defoaming Property Test
Thirty grams of each of the ink compositions described in Examples 1 to 10 and Comparative Examples 1 to 10 was weighed into a sample bottle 37 mm in diameter (inner diameter), 100 mm in height and 110 ml in volume. The bottle was capped and shaken up for 5 seconds to conduct a foaming operation. Then, the height of foam generated was measured. Thereafter, the sample bottle was allowed to sand as such, and the height of foam was measured again after an elapse of a specified time.

### Evaluation 1: Defoaming Property 1

The evaluation index of Examples 1 to 6 and Comparative Examples 1 to 8 is as follows:
A: The height of foam after an elapse of 60 minutes after the foaming operation is 10 mm or less, and the height of foam after an elapse of 120 minutes is 6 mm or less.
B: The height of foam after an elapse of 60 minutes after the foaming operation is 15 mm or less, and the height of foam after an elapse of 120 minutes is 10 mm or less.
C: The height of foam after an elapse of 60 minutes after the foaming operation is 20 mm or less, and the height of foam after an elapse of 120 minutes is 15 mm or less.
D: The height of foam after an elapse of 60 minutes after the foaming operation is higher than 20 mm.
The evaluation results of Examples 1 to 6 and Comparative Examples 1 to 8 are shown in Table 1.

**Table 1**

| | Height (mm) of Foam after Elapsed Time (min.) | | | Defoaming Evaluation 1 |
|---|---|---|---|---|
| | 0 | 60 | 120 | |
| Example 1 | 25 | 7 | 5 | A |
| Example 2 | 20 | 5 | 5 | A |
| Example 3 | 12 | 6 | 5 | A |
| Example 4 | 14 | 8 | 3 | A |
| Example 5 | 15 | 10 | 6 | A |
| Example 6 | 3 | 0 | 0 | A |
| Comparative Example 1 | 25 | 15 | 15 | C |
| Comparative Example 2 | 25 | 14 | 14 | C |
| Comparative Example 3 | 25 | 12 | 10 | B |
| Comparative Example 4 | 25 | 25 | 20 | D |
| Comparative Example 5 | 25 | 20 | 20 | D |
| Comparative Example 6 | 25 | 20 | 15 | C |
| Comparative Example 7 | 25 | 20 | 15 | C |
| Comparative Example 8 | 25 | 20 | 15 | C |

### Evaluation 2: Defoaming Property 2

The evaluation index of Examples 7 to 10 and Comparative Examples 9 and 10 is as follows:

AAA: No foam is observed from immediately after the foaming operation.
AA: The height of foam immediately after the foaming operation is 10 mm or less, the height of foam after an elapse of 15 minutes is 5 mm or less, and the foam disappears after 60 minutes.
A: The height of foam immediately after the foaming operation is 15 mm or less, the height of foam after an elapse of 15 minutes is 10 mm or less, and the height of foam after an elapse of 60 minutes is 6 mm or less.
B: The height of foam immediately after the foaming operation is 25 mm or less, the height of foam after an elapse of 15 minutes is 20 mm or less, and the height of foam after an elapse of 60 minutes is 15 mm or less.
C: The height of foam immediately after the foaming operation is 25 mm or less, the height of foam after an elapse of 15 minutes is higher than 20 mm, and the height of foam after an elapse of 60 minutes is higher than 15 mm.
The evaluation results of Examples 7 to 10 and Comparative Examples 9 and 10 are shown in Table 2.

**Table 2**

| | Height (mm) of Foam after Elapsed Time (min.) | | | | Defoaming Evaluation 2 |
|---|---|---|---|---|---|
| | 0 | 15 | 30 | 60 | |
| Example 7 | 15 | 10 | 8 | 6 | A |
| Example 8 | 7 | 2 | 1 | 0 | AA |
| Example 9 | 3 | 0 | 0 | 0 | AA |
| Example 10 | 0 | 0 | 0 | 0 | AAA |
| Comparative Example 9 | 25 | 22 | 20 | 16 | C |
| Comparative Example 10 | 25 | 20 | 20 | 12 | B |

### Evaluation 3: Print Stability

An ink cartridge for an ink jet printer, PM-4000PX, manufactured by Seiko Epson Corporation is filled with each of the ink compositions described in Examples 11 to 13 and Comparative Examples 11 to 13, and then, mounted on the printer. After the ejection of all nozzles is confirmed, the cartridge is allowed to stand in an environment of 40°C for one month. After standing, a ruled line pattern is printed on plain paper until the ink cartridge reaches an ink end. The evaluation index is as follows:

AA: No missing and thinning of ruled line occur at all.
A: Ruled line thinning occurs near the ink end of the cartridge, but it recovers by cleaning.
B: Ruled line thinning occurs only near the ink end of the cartridge, but it does not recover even by cleaning.
C: Dot missing frequently occurs.

### Evaluation 4: Hue Evaluation

After standing in an environment of 40°C for one month by the method described in evaluation 3, a monochromatic bar pattern is printed on PM photographic paper (manufactured by Seiko Epson Corporation) until the ink cartridge reaches an ink end. The maximum color difference in one cartridge has been evaluated on the basis of the hue of the first printed page. The evaluation index is as follows:

A: The maximum color difference (ΔE) in one cartridge is less than 3.
B: The maximum color difference (ΔE) in one cartridge is from 3 to less than 4.
C: The maximum color difference (ΔE) in one cartridge is from 4 to less than 5.
D: The maximum color difference (ΔE) in one cartridge is 5 or more.
The evaluation results are as shown in the following Table 3.

**Table 3**

| | Evaluation 3 | Evaluation 4 |
|---|---|---|
| Example 11 | A | A |
| Example 12 | AA | A |
| Example 13 | A | B |
| Comparative Example 11 | B | C |
| Comparative Example 12 | B | A |
| Comparative Example 13 | A | D |

While the present invention has been described in detail and with reference to specific embodiments thereof, it will be apparent to one skilled in the art that various changes and modifications can be made therein without departing from the spirit and scope thereof.
This application is based on Japanese Patent Application Nos. 2005-097591 (filed March 30, 2005) and 2005-283024 (filed September 28, 2005), the contents thereof being herein incorporated by reference.

## Claims

1. An ink composition comprising at least a pigment and a water-soluble solvent, wherein the composition comprises an alkyl alcohol having 4 to 6 carbon atoms in an amount of 0.05 to 0.5% by weight.

2. The ink composition according to claim 1, wherein the water-soluble solvent is a 1,2-alkanediol or glycerol.

3. The ink composition according to claim 2, wherein the 1,2-alkanediol is 1,2-hexanediol.

4. The ink composition according to claim 1, wherein the alkyl alcohol having 4 to 6 carbon atoms is an n-alkyl alcohol.

5. The ink composition according to claim 4, wherein the n-alkyl alcohol is 1-hexanol.

6. The ink composition according to claim 1, wherein the composition further comprises a surfactant.

7. The ink composition according to claim 6, wherein the surfactant is a silicone-based surfactant.

8. The ink composition according to claim 7, wherein the silicone-based surfactant is a polyether-modified silicone-based surfactant.

9. The ink composition according to claim 8, wherein the polyether-modified silicone-based surfactant has the following structure: 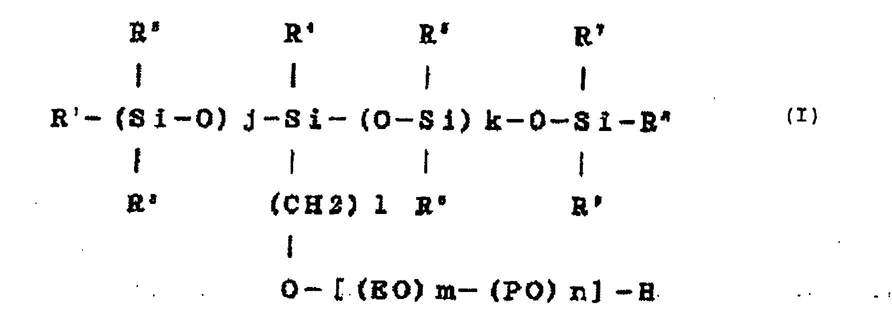 wherein R¹ to R⁹ each independently represents a C₁₋₆ alkyl group, j and k each independently represents an integer of 1 or more, EO represents an ethyleneoxy group, PO represents a propyleneoxy group, and m and n each represents an integer of 0 or more, provided that m+n is an integer of 1 or more, and that the order of EO and PO in the brackets is not limited and EO and PO may be arranged randomly or may form a block.

10. The ink composition according to claim 1, wherein the pigment is a pigment dispersed with a resin.

11. The ink composition according to claim 1, wherein the composition further comprises a sugar alcohol.
